# EUROPEAN PATENT APPLICATION

(11) **EP 4 477 728 A1**
(43) Date of publication of application: **18.12.2024**
(21) Application number: 23305956.7
(22) Date of filing: 16.06.2023
(51) Int. Cl.: C10G 1/10, C01B 3/32, C01B 3/36

(54) **PRODUCTION OF SYNTHESIS GAS BY PARTIAL OXIDATION OF A HYDROCARBON STREAM CONTAINING PLASTIC LIQUEFACTION OIL**

(71) Applicant: TOTALENERGIES ONETECH, 92400 Courbevoie (FR)
(72) Inventor: ADAM, Cindy, 92400 Courbevoie (FR); CHOFFAT, Alexandrine, 92400 Courbevoie (FR); MINOUX, Delphine, 92400 Courbevoie (FR); VAN LOOK, Emmanuel, 92400 Courbevoie (FR); BRETON, Christophe, 92400 Courbevoie (FR)
(74) Representative: Fédit-Loriot

(57) **Abstract**

The invention relates to a process for the production of synthesis gas by partial oxidation from a hydrocarbon stream containing plastic liquefaction oil, comprising:
a) providing a composition stabilized against premature polymerization comprising:
1) a hydrocarbon stream containing at least 2 wt% of plastic liquefaction oil which is containing contaminants, the remaining part of said hydrocarbon stream being a diluent,
2) at least one additive capable to reduce gums formation or buildup,
3) optionally at least one additive which is a dispersant agent,

b) an optional purification step to trap silicon and/or metals and/or phosphorous and/or halogenates over at least one trap to obtain a purified composition,
c) gasifying by partial oxidation the stabilized composition provided in step (a), or the purified composition provided in step (b), in a partial oxidation gasification unit to produce synthesis gas comprising at least dihydrogen, carbon monoxide, and carbon dioxide.

## Description

### Field of the invention

The present invention relates to a process to produce synthesis gas by partial oxidation from a hydrocarbon stream containing plastic liquefaction oil.

### Background

Waste materials, especially non-biodegradable waste materials, can negatively impact the environment when disposed of in landfills after a single use. Thus, from an environmental standpoint, it is desirable to recycle as much waste material as possible. Common industrial methods for recycling hydrocarbons from plastic include liquefaction of waste plastic such as pyrolysis or hydrothermal liquefaction, followed by a partial oxidation gasification. Partial oxidation gasification is a process that can be used to produce a synthesis gas containing dihydrogen from a carbon-containing feedstock.

Liquefaction process transforms plastics, and most of their additives and contaminants, into gaseous chemicals while most of the non-volatile contaminants or additives end up in the solid by-product, chars or ashes. In principle, any kind of plastic waste can be converted, although some pre-sorting of non-organic waste is desired, and purification of the output material is necessary as several hetero-elements (i.e. presently referred to as elements different of carbon, hydrogen or oxygen) may be volatilized.

Plastic waste is a complex and heterogeneous material, due to several factors. First, plastic as material refers to numerous different polymers with different chemical properties that need to be separated from each other prior to recycling. The main polymers found in plastic from municipal solid waste are polyethylene terephthalate (PET), polyethylene (PE), polypropylene (PP) and polystyrene (PS). Other polymers essentially include polyurethanes, polyamides (PA), polycarbonates, polyethers and polyesters other than PET. Second, many different additives are introduced during the production phase to adjust or improve the properties of the plastic or to fulfil specific requirements. These include additives such as functional additives (stabilizers, antistatic agents, flame retardants, plasticizers, lubricants, slipping agents, curing agents, foaming agents, biocides, antioxidants etc.), dyes and pigments, fillers (e.g. glass fibers, talcum, carbon fibers, carbon nanotubes), commonly used in plastic packaging as well as additives such as flame retardants, frequently used in plastic for electronics. In addition, several metal compounds are purposely added during plastic production (often as oxides, carbonates, acids, etc.). Beside additives containing hetero elements other than metals are used in making plastics, for instance halogens such as bromine in flame retardants, plasticizers, stabilizers etc.

Silicone polymers, which are silicon containing organic materials, are often used in plastic formulations. Thanks to their surface characteristics, applications for silicones range from silicone rubbers, used as sealants for joints, to silicone surfactants for cosmetic products while they are increasingly used in the plastics sector, as process enhancing additives (processing aids), and for the modification of polymers.

On top of these hetero-elements, the used plastic waste can have been contaminated during lifespan by remains of liquids with which they were in contact (beverages, personal-care products, etc.) and of food that can also introduce contamination of the plastic. Last, some plastic waste may be present in the form of partially decomposed waste, such as partly burnt plastic.

Finally, as plastics are contaminated by oxygenates, liquefaction plastic oils may also contain oxygenates such as aldehydes or ketones.

Partial oxidation gasification is typically carried out at elevated temperatures which can increase the rate of undesired polymerization. Polymerization, such as thermal polymerization, results not only in product loss, but also in loss of production efficiency caused by the formation of fouling deposits and their deposition on process equipment, particularly on the heat transfer surfaces of the processing equipment. These deposits decrease the thermal efficiency of the equipment. In addition, operating modifications to reduce the rate of fouling can result in reduced production capacity. The excessive buildup of such deposits can cause plugging in transfer tubes and process lines, which could result in unplanned shutdowns.

Undesirable polymerization may also cause operational problems such as increase in fluid viscosity, temperature, restricted flow in pipelines, and blocking of filters. In heat requiring operations, such deposition adversely affects heat transfer efficiency.

The behaviour of compositions produced from liquefaction of waste plastic is difficult to forecast due to the complexity of such compositions and the variations in their compositions depending on the nature of the plastic wastes used. For example, analysis by gas chromatography of liquefaction plastic oil only allows identification of 25 to 45wt% of the compounds containing oxygen and azote.

There is therefore a need for a process to produce synthesis gas by partial oxidation from a hydrocarbon stream containing plastic liquefaction oil limiting undesirable polymerisation.

### Brief summary of the invention

The present invention is a process for the production of synthesis gas by partial oxidation from a hydrocarbon stream containing plastic liquefaction oil, comprising:
a) providing a composition stabilized against premature polymerization comprising:
   1) a hydrocarbon stream having a diene value of at least 0.5 g I₂/100 g as measured according to UOP 326, a bromine number of at least 5 g Br₂/ 100g as measured according to ASTM D1159, and containing at least 1 wt% of plastic liquefaction oil which is containing contaminants, wherein said contaminants comprise constituents which are not boiling below 700°C, preferably not below 600°C, such as gums in the form of plastic oligomers and residues of liquefaction of plastic, optionally metals and optionally solids, the remaining part of said hydrocarbon stream being a diluent,
   2) at least one additive capable to reduce gums formation or buildup which is an antioxidant or an antipolymerant or a precursor thereof,
   3) optionally at least one additive which is a dispersant agent,
   4) optionally at least one other additive which is a metal passivator and/or a metal chelating agent,
b) an optional purification step to trap silicon and/or metals and/or phosphorous and/or halogenates over at least one trap to obtain a purified composition,
c) gasifying by partial oxidation the stabilized composition provided in step (a) or the purified composition provided in step (b) in a partial oxidation gasification unit to produce synthesis gas comprising at least dihydrogen, carbon monoxide, and carbon dioxide.

In one embodiment the composition provided in step a) may include one or several of the following features :
- at least one additive capable to reduce gums formation or buildup and at least one dispersant agent are present;
- said at least one additive capable to reduce gums formation or buildup is an antipolymerant such as a stable free radical or a precursor thereof;
- the antipolymerant is selected from a stable nitroxide free radical and a hydroxylamine substituted with at least one alkyl, aryl or alkylaryl group;
- said at least one additive capable to reduce gums formation or buildup is selected among the unhindered phenols, the hindered phenols, the aminophenols, the phenylenediamines and mixtures thereof;
- said at least one additive which is a dispersant agent is selected from products of reaction between a phenol substituted with a C9-110 hydrocarbon chain, an aldehyde and an amine or polyamine or ammonia, from alkenyl succinimides or mixtures thereof;
- the proportion of 2) with reference to 1) is from is from 20 to 5000wppm, preferably from 50 to 3000wppm, more preferably from 100 to 1500wppm;
- the proportion of 3) with reference to 1) is from 20 to 5000wppm, preferably from 50 to 3000wppm, more preferably from 100 to 1500wppm;
- the proportion of 4) with reference to 1) is from 20 to 5000wppm, preferably from 50 to 3000wppm, more preferably from 100 to 1500wppm;
- other additives, including metal passivators or metal chelatants.

In a first preferred embodiment, the stabilized composition may comprise 1) a hydrocarbon stream as defined above, 2) at least one additive capable to reduce gums formation or buildup selected from hindered phenols including metal salts thereof, and 3) at least one additive which is a dispersant agent.

Advantageously, said at least one additive capable to reduce gums formation or buildup may be selected from hindered phenols, advantageously including metal salts thereof, and said at least one dispersant agent may be selected from alkylbenzene sulfonates in which the alkyl group contains 8-18 carbons, metal sulfonates and alkenyl succinimides.

In particular, the additive capable to reduce gums formation or buildup may be a hindered phenol and the dispersant agent may be a polyisobutylene succinimide.

More specifically, the additive capable to reduce gums formation or buildup may be selected from 4-tert butylcatechol (TBC); 2,6-di tertbutylphenol; butylated hydroxyltoluene (BHT) and the at least one dispersant agent may be a polyisobutylene succinimide, in particular of CAS n°84605-20-9.

In a second preferred embodiment, the stabilized composition may comprise 1) a hydrocarbon stream as defined above, 2) at least one additive capable to reduce gums formation or buildup which is the product of tall oil fatty acids reacted with a polyamine, and optionally 3) at least one additive which is a dispersant agent. Preferably, component 3) is not present.

In the second preferred embodiment, the additive capable to reduce gums formation or buildup may be the product of tall oil fatty acids reacted with a polyalkylene polyamine, such as a polyethylene polyamine. The polyamine may optionally be selected from diethylenetriamine, triethylenetetramine, or tetraethylenepentamine, preferably diethylenetriamine.

In any of the previous embodiments, optionally, the stabilized composition may further comprise:
4) at least one other additive which is a metal passivator and/or a metal chelating agent.

In any embodiment, other additives capable to reduce gums formation or buildup and/or dispersant agent may optionally be present in the composition, as the ones disclosed in the present specification.

In one embodiment, optionally in combination with one or several of the preceding features, step (a) may comprise:
(a1) providing a hydrocarbon stream having a diene value of at least 0.5 g I2/100 g as measured according to UOP 326, a bromine number of at least 5 g Br2/ 100g as measured according to ASTM D1159, and containing at least 1 wt% of plastic liquefaction oil which is containing contaminants, wherein said contaminants comprise constituents which are not boiling below 700°C, preferably not below 600°C, such as gums in the form of plastic oligomers and residues of liquefaction of plastic, optionally metals and optionally solids, the remaining part of said hydrocarbon stream being a diluent,
(a2) adding to the hydrocarbon stream provided in step (a) at least one additive capable to reduce gums formation or buildup which is an antioxidant or an antipolymerant or a precursor thereof,
(a3) optionally adding to the hydrocarbon stream provided in step (a) at least one additive which is a dispersant agent,
(a4) optionally adding to the hydrocarbon stream provided in step (a) at least one one other additive which is a metal passivator and/or a metal chelating agent.
Step (a) may comprise one or several of the following features :
- step (a1) comprises:
   (i) providing at least one plastic liquefaction oil by liquefaction of plastic waste,
   (ii) optionally providing a diluent,
   (iii) preparing a hydrocarbon stream having a diene value of at least 0.5 g I2/100 g as measured according to UOP 326, a bromine number of at least 5 g Br2/ 100g as measured according to ASTM D1159 by mixing said at least one plastic liquefaction oil provided in step (i) with the diluent provided in step (ii) when present, said composition comprising at least 1wt% of plastic liquefaction oil, the remaining part of said hydrocarbon stream being a diluent;
- in step (a2), said at least one additive capable to reduce gums formation or buildup is added to said at least one plastic liquefaction oil provided by step (i), prior to step (iii);
- in step (a3), said at least one additive provided in step (a2) and/or (a3) is added to said at least one plastic liquefaction oil provided by step (i), prior to step (iii).

In any of the previous embodiments, the stabilized composition provided in step a) or the purified composition provided in step b) may be, prior to step c), separated by distillation into at least a heavy fraction and a light fraction, and the heavy fraction is sent to step c).

In any of the previous embodiments, the stabilized composition provided in step a) or the purified composition provided in step b) or a heavy fraction thereof, may be, prior to step c), mixed with another hydrocarbon feedstock to have a plastic liquefaction oil concentration ranging from 0.01 wt% to at most 90 wt%; preferably 0.1 wt% to 75 wt% even more preferably 1 wt% to 50 wt%.

The use of these stabilized compositions prevents fouling of equipment and product during the POX gasification.

An object of the invention also concerns an installation comprising a stabilizing section, an optional purification section, an optional separation section, a partial oxidation gasification, wherein said sections are fluidically connected to perform the process according to the invention.

### Definitions

The terms "alkane" or "alkanes" as used herein describe acyclic branched or unbranched hydrocarbons having the general formula CₙH₂ₙ₊₂, and therefore consisting entirely of hydrogen atoms and saturated carbon atoms; see e.g. IUPAC. Compendium of Chemical Terminology, 2nd ed. (1997). The term "alkanes" accordingly describes unbranched alkanes ("normal-paraffins" or "n-paraffins" or "n-alkanes" or "paraffins") and branched alkanes ("iso-paraffins" or "iso-alkanes") but excludes naphthenes (cycloalkanes). They are sometimes referred to by the symbol "HC-".

The terms "olefin", "olefins", "alkene" or "alkenes" as used herein relate to an unsaturated hydrocarbon compound containing at least one carbon-carbon double bond. They are sometimes referred to by the symbol "HC=".

The terms "alkyne" or "alkynes" as used herein relate to an unsaturated hydrocarbon compound containing at least one carbon-carbon triple bond.

The term "hydrocarbon" or "hydrocarbons" refers to the alkanes (saturated hydrocarbons), cycloalkanes, aromatics and unsaturated hydrocarbons alone or in combination.

As used herein, the terms "C# alcohols", "C# alkenes", or "C# hydrocarbons", wherein "#" is a positive integer, is meant to describe respectively all alcohols, alkenes or hydrocarbons having # carbon atoms. Moreover, the term "C#+ alcohols", "C#+ alkenes", or "C#+ hydrocarbons", is meant to describe all alcohol molecules, alkene molecules or hydrocarbons molecules having # or more carbon atoms. Accordingly, the expression "Cs+ alcohols" is meant to describe a mixture of alcohols having 5 or more carbon atoms.

As used herein, the terms "silicon", "metals", "phosphorous", "halogens", "nitrogen" and "oxygen" refer to their respective chemical elements contained in the stream to be purified.

Weight hourly space velocity (WHSV) is defined as the hourly weight of flow per unit weight of catalyst and liquid hourly space velocity (LHSV) is defined as the hourly volume of flow per unit of volume of catalyst.

The terms "comprising", and "comprises" as used herein are synonymous with "including", "includes" or "containing", "contains", and are inclusive or open-ended and do not exclude additional, non-recited members, elements or method steps.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The term "conversion" means the mole fraction (i.e., percent) of a reactant converted to a product or products. The term "selectivity" refers to the percent of converted reactant that went to a specified product.

The terms "wt%", "vol%", or "mol%" refers to a weight, volume, or molar percentage of a component, respectively, based on the total weight, the total volume of material, or total moles, that includes the component. In a non-limiting example, 10 grams of component within 100 grams of the material is 10 wt% of components.

Unless otherwise specified, "wtppm" or "ppm" each equally refer to "parts per million" and are given based on weight. For instance, "100 ppm" shall mean 100 ppm by weight. Similarly, the term "wtppb" or "ppb" refers to "parts per billion" and are given based on weight.

The term **"naphtha"** refers to the general definition used in the oil and gas industry. Naphtha refers to a hydrocarbon originating from crude oil distillation having a boiling range from 15 to 250°C as measured by ASTM D2887. Naphtha contains substantially no olefin as the hydrocarbons originates from crude oil. It is generally considered that a naphtha has carbon number between C3 and C11, although the carbon number can reach in some case C15. It is also generally admitted that the density of naphtha ranges from 0.65 to 0.77 g/mL.

The term "**gas oil"** refers to the general definition used in the oil and gas industry. It refers to a hydrocarbon originating from crude oil distillation having a boiling range from 210 to 360°C as measured by ASTM D86. Gas oil contains substantially no olefin as the hydrocarbons originates from crude oil. It is generally considered that a gas oil has carbon number between C12 and C20, although the carbon number can reach in some case C25. It is also generally admitted that the density of gas oil ranges from 0.82 to 0.86 g/mL, wherein commercial specification limits density to 0.86 g/mL according to ASTM D1298 (ISO 3675, IP 160).

The term **"LPG"** refers to the general definition used in the oil and gas industry. It refers to a hydrocarbon essentially comprised of C3 (propane) with some C4 isomers; n-butane and isobutene.

The terms "plastic liquefaction oil", "liquefied plastic oil" or "oil resulting from the liquefaction of plastic" refer to the liquid products resulting from the pyrolysis of plastic and/or from the hydrothermal liquefaction of plastic, alone or in mixture and generally in the form of plastic waste, optionally in mixture with at least one other waste such as an elastomer, for example latex optionally vulcanized or tyre, and/or biomass, e.g. selected from lignocellulosic biomass, paper and board. The pyrolysis process must be understood as a thermal cracking process, implemented in the presence or not of a catalyst (for example catalytic fast pyrolysis or not, etc....). Hydrothermal liquefaction (HTL) is a thermochemical conversion process using water as a solvent, reagent and catalyst for the degradation reactions of plastics, the water being typically in a subcritical or supercritical state.

The biomass may be defined as a vegetal or animal organic product including residues and organic waste. Biomass includes (i) the biomass produced by the surplus of agricultural land, not used for human or animal food: dedicated crops, called energy crops; (ii) the biomass produced by the deforestation (forest maintenance) or the cleaning of agricultural land; (iii) agricultural residues from cereal crops, vineyards, orchards, olive trees, fruits and vegetables, residues from the agri-food industry,... (iv) forestry residues from forestry and wood processing; (v) agricultural residues from livestock farming (manure, slurry, litter, droppings, etc.); (vi) organic waste from households (paper, cardboard, green waste, etc.); (vii) ordinary industrial organic waste (paper, cardboard, wood, putrescible waste, etc.). The liquefaction plastic oil processed by the invention can be derived from the liquefaction of waste containing at least 1%m/m, optionally 1-50%m/m, 2-30%m/m, or in a range defined by any two of these limits, of one or more of the aforementioned biomasses, residues and organic waste materials, and the remainder being waste plastics, optionally in admixture with elastomers.

Elastomers are linear or branched polymers transformed by vulcanization into an infusible and insoluble three-dimensional weakly cross-linked network. They include natural or synthetic rubbers. They can be part of tire waste or any other household or industrial waste containing elastomers, natural and/or synthetic rubber, mixed or not with other components, such as plastics, plasticizers, fillers, vulcanizing agents, vulcanization gas pedals, additives, etc. Examples of elastomeric polymers include ethylene-propylene copolymers, ethylene-propylene-diene terpolymer (EPDM), polyisoprene (natural or synthetic), polybutadiene, styrene-butadiene copolymers isobutene-based polymers, isobutylene-isoprene copolymers, chlorinated or brominated, acrylonitrile butadiene copolymers (NBR), and polychloroprenes (CR), polyurethanes, silicone elastomers, etc. The plastic liquefaction oil processed by the invention can be derived from the liquefaction of waste materials containing at least 1%m/m, optionally 1-50%m/m, 2-30%m/m or in a range defined by any two of these limits, of one or more of the aforementioned elastomers, especially in the form of waste materials, with the remainder being waste plastics, optionally in admixture with biomass, residues, and organic waste materials.

The plastic to be liquefied can be of any type. For instance, the plastic to be liquefied can be polyethylene, polypropylene, polystyrene, polyester, polyamide, polycarbonate, etc. These plastic liquefaction oils contain paraffins, i-paraffins (iso-paraffins), dienes, alkynes, olefins, naphthenes, and aromatic components. Plastic liquefaction oil may also contain impurities such as organic chlorides, oxygenated and/or silylated organic compounds, organic silicon compounds, metals, salts, phosphorous, sulfur and nitrogen compounds. The plastic used for generating plastic liquefaction oil is a waste plastic, irrespective of its origin or nature. The composition of the plastic liquefaction oil is dependent on the type of plastic that is liquefied. Plastic liquefaction oil is mainly (especially over 80wt%, most often over 90wt%) constituted of hydrocarbons having from 1 to 150 carbon atoms and impurities.

The term **"Diene Value"** (DV) or **"Maleic Anhydride Value"** (MAV) is a measure of the conjugated double bonds (dienes) in the oil. For the Maleic Anhydride Value (MAV), one mole of Maleic anhydride corresponds to 1 mole of conjugated double bond and the result corresponds to the amount of maleic anhydride in milligrams that will react with 1 gram of oil. One known method to quantify dienes is the UOP 326-17: Diene Value by Maleic Anhydride Addition Reaction. The term "diene value" (DV) refers to a similar analytical method to quantify dienes by titration, which is expressed in g of iodine per 100 g of sample. There is a correlation between the MAV = DV x 3,863 since 1 mole of conjugated double bond is titrated by 1 mole of Maleic Anhydride or 1 mole of Iodine.

The term **"bromine number"** corresponds to the amount of reacted bromine in grams by 100 grams of sample. The number indicates the quantity of olefins in a sample. It is determined in grams of Br₂ per 100 grams of sample (gBr₂/100g) and can be measured according to ASTM D1159-07R17 method.

The term **"boiling point"** refers to boiling point generally used in the oil and gas industry. Boiling point is measured at atmospheric pressure. The initial boiling point is defined as the temperature value when the first bubble of vapor is formed. The final boiling point is the highest temperature that can be reached during a standard distillation. At this temperature, no more vapor can be driven over into the condensing units. The determination of the initial and final boiling points is known in the art. Depending on the boiling range of the mixture, various standardized methods can be used, such as ASTM D2887-19ae2 relating to the boiling range distribution of petroleum fractions by gas chromatography. For compositions containing heavier hydrocarbons ASTM D7169-05 may alternatively be used. Boiling range of distillates is advantageously measured using ASTM D7500, D86 or D1160.

The concentration of metals in the matrix of hydrocarbon can be determined by any method known in the art. Relevant characterization methods include XRF or ICP-AES or ICP-MS methods. Those skilled in the art know which method is the most adapted to each metal measurement and to which hydrocarbon matrix. Features, structures, characteristics or embodiments may be combined in any suitable manner, as would be apparent to a person skilled in the art from this disclosure, in one or more embodiments.

« **Potential gums** » inform on the tendency of a fuel to form gum and deposits under accelerated aging conditions. They give an indication on the stability of a fuel during its storage. Potential gums can be determined by means of method ASTM D873-12(2018).

« **Existing gums** » correspond to quantity of residue remaining after evaporation of a fuel under specific conditions. They give an indication on the stability of a fuel when heated. Existing gums can be determined by means of method NF EN ISO 6246 (2018) et ASTM D381-19.

**"Induction period"** corresponds to an initial low stage of a chemical reaction in the area of chemical kinetics. After the induction period, the reaction accelerates. It may be estimated by oxidation stability tests such as EN 16091:2022.

### Detailed description of the invention

**As regards the hydrocarbon stream,** it has a diene value of at least 0.5 g I2/100 g, preferably at least 1 g I2/100 g, as measured according to UOP 326, a bromine number of at least 5 g Br₂/ 100g as measured according to ASTM D1159.

The hydrocarbon stream contains at least 1wt% or at least 2 wt% of plastic liquefaction oil. In a preferred embodiment, said hydrocarbon stream may contain at least 5wt%, preferably at least 10wt%, more preferably at least 25 wt % of plastic liquefaction oil, most preferably at least 50 wt%, even more preferably 75 wt %, and preferably at most 80 wt % of plastic liquefaction oil, and/or at most 90 wt % preferably at most 95 wt %, even more preferably at most 100 wt % of said plastic liquefaction oil, the rest being for instance a diluent or other hydrocarbons. It is also possible to use pure plastic liquefaction oil, and this is the most preferred embodiment. In the latter case, the hydrocarbon stream is only consisting of plastic liquefaction oil.

Contaminants contained in plastic liquefaction oil may comprise constituents which are not boiling below 700°C, preferably not below 600°C, such as gums in the form of plastic oligomers and residues of pyrolysis of plastic, optionally metals and optionally solids.

Plastic liquefaction oil typically comprises from 5 to 80 wt% of paraffins (including cyclo-paraffins), from 10 to 95 wt% of unsaturated compounds (comprising olefins, dienes, acetylenes), from 5 to 70wt% of aromatics. These contents can be determined by gas chromatography.

In particular, a plastic liquefaction oil may comprise a Bromine Number of 20 to 130 g Br/100g and/or a Maleic Anhydride Index (UOP326-82) of 1 to 55 mg Maleic Anhydride/1g.

In a preferred embodiment, plastic liquefaction oil in said stream has a final boiling point of at most 700°C, preferably at most 600°C even more preferably 560°C, more preferably 450°C even more preferably 350°C, the most preferred 250°C and/or plastic liquefaction oil has a dienes content ranging from 0.1 wt % to 50.0 wt %, preferably from 1 to 25 wt % even more preferably from 1 to 10 wt %.

Advantageously, the plastic liquefaction oil originating from of hydrothermally liquefied or pyrolyzed waste plastic is separated, preferably via distillation or via stage condensation, into a C1 to C4 hydrocarbons fraction, a fraction having a boiling range higher than 350°C and a fraction being said plastic liquefaction oil; and the fraction having an initial boiling point of at least 350°C, preferably at least 300°C is removed and sent into a FCC, or an hydrocracking unit, a coker or a visbreaker or blended said heavy hydrocarbon fraction in crude oil or in a crude oil cut to be further refined.

In any of the embodiments of the invention, the above-mentioned plastic liquefied oil may preferably be a pyrolysis plastic oil.

The other component of said hydrocarbon stream may include any diluent or hydrocarbons miscible with the plastic liquefaction oil. Such diluent preferably has a diene value of at most 0.5 g I₂/100 g as measured according to UOP 326-17, a bromine number of at most 5 g Br₂/ 100g as measured according to ASTM D1159.

The diluent according to the invention is preferably selected from a naphtha and/or a paraffinic solvent and/or a diesel or a straight run gasoil, containing at most 1 wt% of sulfur, preferably at most 0.1 wt% of sulfur, and/or a hydrocarbon stream having a boiling range between 50°C and 150°C or a boiling range between 150°C and 250°C or a boiling range between 200°C and 350°C, having preferably a bromine number of at most 5 gBr₂/100g, and/or a diene value of at most 0.5 gI₂/100g or any combination thereof.

Alternatively or in combination, the other component of said hydrocarbon stream may include any one or more of the following components: a tall oil, a used food oil, an animal fat, a vegetable oil such as rapeseed, canola, castor, palm, soybean oil, an oil extracted from an algae, an oil extracted from a fermentation of oleaginous microorganisms such as oleaginous yeasts, an oil from liquefaction of biomass, in particular an oil from liquefaction of biomass such as *Panicum virgatum or* an oil of lignocellulosic biomass liquefaction, for example an oil of liquefaction of wood, paper and/or cardboard, an oil obtained by liquefaction of crushed used furniture, an oil of liquefaction of elastomers, for example latex, possibly vulcanized, or tires, as well as their mixtures.

**As regards the additives capable to reduce gums formation or buildup,** one can cite antioxidants, in particular synthetic antioxidants, and antipolymerants, including unhindered phenols, hindered phenols, aminophenols, phenylenediamines, a metal salt of a hindered phenol, an oil-soluble polymetal organic compound, a hindered phenylenediamine compound, diphenylamines, phenyl naphthylamines, phenothiazines, imidodibenzyls, diphenyl phenylene diamines, aromatic amines, or combinations thereof.

**As regards the antipolymerant used as additive capable to reduce gums formation or buildup,** one can cite an antipolymerant such as a stable free radical or a precursor thereof, such as a hydroxylamine compound. "Antipolymerants" broadly refer to compounds that generally inhibit or reduce the formation of polymers from one or more radically polymerizable compounds.

Any stable free radical (or precursor thereof under conditions which produce the stable free radical in situ) as defined may be used in the present invention. The stable free radicals suitable for use in this invention may be selected from, but are not limited to, the following groups of chemicals: nitroxides (e.g., di-tert butylnitroxide), hindered phenoxys (e.g., galvinoxyl), hydrazyls (e.g., diphenylpicrylhydrazyl), and stabilized hydrocarbon radicals (e.g., triphenylmethyl), as well as polyradicals, preferably biradicals of these types. In addition, certain precursors that produce stable free radicals in situ may be selected from the following groups: nitrones, nitrosos, thioketones, benzoquinones, amines and hydroxylamines.

These stable free radicals exist over a wide range of temperatures up to about 260°C. A limiting factor in their use is the temperature of the processing wherein they are employed. Specifically, the present method applies to processing carried on at temperatures at which said stable free radical exists. Pressure has not been seen to be significant to the present method, hence, atmospheric, sub or superatmospheric conditions may be employed.

In an advantageous embodiment the stable free radical may be a stable nitroxide and may be substituted with at least one alkyl, aryl or alkylaryl group.

In an advantageous embodiment the hydroxylamine may be substituted with at least one alkyl, aryl or alkylaryl group.

Preferably, the stable nitroxide free radical or the hydroxylamine may be substituted with a straight or branched chain alkyl of 1 to 20 carbon atoms, a straight or branched chain alkyl of 1 to 20 carbon atoms which is substituted by one to three aryl groups, an aryl of 6 to 12 carbon atoms, or an aryl of 6 to 12 carbon atoms which is substituted by one to three alkyl groups of 1 to 6 carbon atoms.

Specific examples of such suitable hydroxylamines substituted with at least one alkyl, aryl or alkylaryl group as detailed above include, but are not necessarily limited to N-ethylhydroxylamine (EHA); N,N'-diethylhydroxylamine (DEHA); N-ethyl N-methylhydroxylamine (EMHA); N-isopropylhydroxylamine (IPHA); N,N' dibutylhydroxylamine (DBHA); N-amylhydroxylamine (AHA); N-phenylhydroxylamine (PHA); and the like and mixtures thereof.

A stable nitroxide free radical that can be used in this invention is a nitroxide having the formula (I) shown below or an amine precursor thereof. 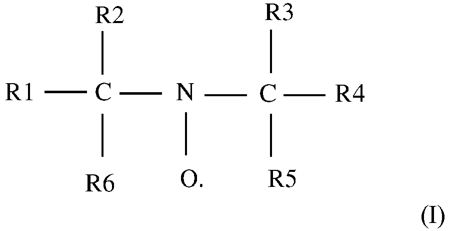 wherein R1, R2, R3 and R4 are alkyl groups or heteroatom substituted alkyl groups and no hydrogen is bound to the remaining valences on the carbon atoms bound to the nitrogen. The alkyl (or heteroatom substituted) groups R1-R4 may be the same or different, and preferably contain 1 to 15 carbon atoms. Preferably R1-R4 are methyl, ethyl, or propyl groups. In addition to hydrogen the heteroatom substituents may include, halogen, oxygen, sulfur, nitrogen and the like.

The remaining valences R5-R6 in the formula above may be satisfied by any atom or group except hydrogen which can bond covalently to carbon, although some groups may reduce the stabilizing power of the nitroxide structure and are undesirable. Preferably R5 and R6 are halogen, cyano,--COOR wherein R is alkyl or aryl, --CONH2, --S--C6H5, --S--COCH3, --OCOC2H5, carbonyl, alkenyl where the double bond is not conjugated with the nitroxide moiety or alkyl of 1 to 15 carbon atoms, R5 and R6 may also form a ring of 4 or 5 carbon atoms and up to two heteroatoms, such as O, N or S by R5 and R6 together. Examples of suitable compounds having the structure above and in which R5 and R6 form part of the ring are pyrrolidin-1-oxys, piperidinyl-1-oxys, the morpholines and piperazines. Particular examples wherein the R5 and R6 above form part of a ring are 4-hydroxy-2,2,6,6-tetramethyl-piperindino-1-oxy, 2,2,6,6-tetramethyl-piperidino-1-oxy, 4-oxo-2,2,6,6-tetramethyl-piperidino-1-oxy and pyrrolin-1-oxyl. Suitable R5 and R6 groups are methyl, ethyl, and propyl groups. A specific example of a suitable compound where R1-R6 are alkyl groups is di-tert-butylnitroxide. The preferred carbonyl containing nitroxides are those wherein the R5 and R6 form a ring structure with the nitrogen, preferably a six number ring, for example, 4-oxo-2,2,6,6-tetramethylpiperidino-1-oxy. Examples of nitroxides that can be used in the present invention are the 4-hydroxy-2,2,6,6-tetramethylpiperidine-1-oxyl (also referred as 4 OH Tempo), the 4-amino-2,2,6,6-tetramethylpiperidine-1-oxyl (also referred as 4 NH Tempo), and 4 butoxy Tempo, or their amine precursors.

**As regards other additives capable to reduce gums formation or buildup,** one can also cite as antioxidant the unhindered phenols, the hindered phenols and a metal salt of a hindered phenol, the aminophenols, the phenylenediamines including hindered phenylenediamines, an oil-soluble polymetal organic compound, diphenylamines, phenyl naphthylamines, phenothiazines, imidodibenzyls, diphenyl phenylene diamines, aromatic amines, or combinations thereof, preferably the unhindered phenols, the hindered phenols and a metal salt of a hindered phenol, the aminophenols.

The aminophenol may be selected from the compounds given by the following formula (II):

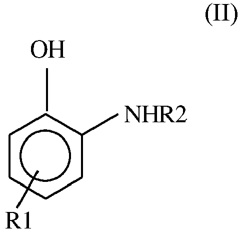

Where R1 is selected from hydrogen, a C1-C20 alkyl group, C6-C12 aryl group, or OR', with R' being a H, an C1-C20 alkyl or a C6-C12 aryl group. R2 is selected from an C1-C20 alkyl, a phenyl group, or OR', with R' having the same meaning as before.

Non-exclusive examples of such compounds are 2-aminophenol (2 AP), 3-hydroxy-2-aminophenol, 2-amino-naphthalen-1-ol, 3-amino-naphthalen-2-ol, 1-amino-naphthalen-2-ol, 2-amino-tert-butyl-phenol, and 2-amino-4-methyl-phenol.

Suitable hindered or unhindered phenols may include, but are not necessarily limited to, 4-tert butylcatechol (TBC); tert-butyl hydroquinone (TBHQ); 2,6-di-tert-butyl-4-methoxyphenol (DTBMP); 2,4 di-tert-butylphenol; 2,5-di-tert-butylphenol; 2,6-di tertbutylphenol; 2,4, tri-tert-butylphenol; butylated hydroxyltoluene (BHT, also known as 2,6 di-tert-butyl-paracresol and 2,6 di-tert-butyl methylphenol); 2,6 di-tert-butyl-4-nonylphenol; 2,6-di-tert-butyl-4-sec-butylphenol; 2-butyl-4-methylphenol; 2-tert-butyl-4-methoxyphenol (also known as butylated hydroxyanisole or BHA); 3-tert-butyl-4-methoxyphenol ; 2-tert-butyl-4-heptylphenol; 2-tert-butyl-4-octylphenol; 2-tert-butyl-4-dodecylphenol; 2,6-di-tert-butyl-4-heptylphenol; 2,6-di-tert-butyl-4-dodecylphenol; 2-methyl-6-tert-butyl-4-heptylphenol; 2-methyl-6-tert-butyl-4-dodecyl phenol; 2,2'-bis(4-heptyl-6-t-butyl-phenol); 2,2'-bis(4-octyl-6-t-butyl-phenol); 2,2'-bis(4-dodecyl-6-t-butyl-phenol); 4,4'-bis(2,6-di-t-butyl phenol), 4,4'-methylene-bis(2,6-di-t-butyl phenol); 2,6-di-alkyl-phenolic proprionic ester derivatives; propyl gallate; 2-(1,1-dimethylethyl)-1,4-ben-zenediol; 2-di-tert-butyl hydroquinone 15 (DTBHQ); tert-amyl hydroquinone; 2,5-di-amyl hydroquinone; 3, di-tert-butylcatechol; hydroquinone; hydroquinone monomethyl ether; hydroquinone monoethyl ether; hydroquinone monobenzyl ether; or 3,3,3',3'-tetramethyl, 1,1-spirobis-indane-5,5',6,6' tetrol (Tetrol); topanol^{®} AN (mixture of BHT and 2,4 Dimethyl-6-tert-butylphenol), tocopherols (C₂₉H₅₀O₂) including alpha-, beta-, gamma-, delta-tocopherol, 2-[3,3-bis(3-*tert*-butyl-4-hydroxyphenyl)butanoyloxy]ethyl 3,3-bis(3-*tert*-butyl-4-hydroxyphenyl)butanoate (C₅₀H₆₆O₈), and mixtures thereof.

The phenylenediamines of this invention have at least one N-H group and are advantageously of the following formula (III): 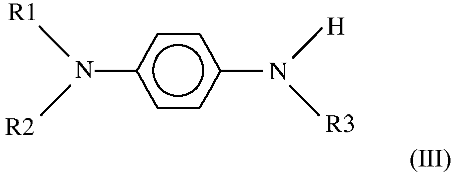 wherein R1, R2, and R3 are the same or different and are hydrogen, straight or branched chain alkyl of 1 to 20 carbon atoms, straight or branched chain alkyl of 1 to 20 carbon atoms which is substituted by one to three aryl groups, aryl of 6 to 12 carbon atoms, or aryl of 6 to 12 carbon atoms which is substituted by one to three alkyl groups of 1 to 6 carbon atoms.

Suitable examples of phenylenediamines include N-phenyl-N'-methyl-1,4-phenylediamine, N-phenyl-N'-ethyl-1,4-phenylediamine, N-phenyl-N'-n-propyl-1,4-phenylediamine, N-phenyl-N'-isopropyl-1,4-phenylediamine (NIPP PPDA), N-phenyl-N'-n-butyl-1,4-phenylediamine, N-phenyl-N'-iso-butyl-1,4-phenylediamine, N-phenyl-N'-sec-butyl-1,4-phenylediamine, N-phenyl-N'-t-butyl-1,4-phenylediamine, N-phenyl-N'-n-pentyl-1,4-phenylediamine, N-phenyl-N'-n-hexyl-1,4-phenylediamine, N-phenyl-N'-(l-methylhexyl)-1,4-phenylediamine, N-phenyl-N'-(1,3 -dimethylbutyl)-1,4-phenylediamine, N-phenyl-N'-(1,4-dimethylpentyl)-1,4-phenylediamine, N-phenyl-N', N'-dimethyl-1,4-phenylenediamine, N-phenyl-N',N'-diethyl-1,4-phenylenediamine, N-phenyl-N',N'-di-n-butyl-1,4-phenylenediamine, N-phenyl-N,N'-di-sec-butyl-1,4-phenylenediamine, N-phenyl-N'-methyl-N'-ethyl-1,4-phenylenediamine, N,N'-dimethyl-1,4-phenylenediamine, N, N'-di ethyl-1,4-phenylenediamine, N,N'-di-isopropyl-1,4-phenylenediamine, N,N'-di-iso-butyl-1,4-phenylenediamine, N,N'-di-sec-butyl-1,4-phenylenediamine (DSB PPDA), N,N'-bis(1,4-dimethylpentyl)-1,4-phenylenediamine, N,N'-bis(1,3-dimethylbutyl)-1,4-phenylenediamine, N,N'-diphenyl-1,4-phenylenediamine, N,N,N'-trimethyl-1,4-phenylenediamine, and N,N,N'-triethyl-1,4-phenylenediamine and N-phenyl-p-phenylenediamine (NP PPDA), and mixtures thereof.

In a preferred embodiment, the additive capable to reduce gums formation or buildup is selected among the unhindered phenols, the hindered phenols, the aminophenols, the phenylenediamines, and mixtures thereof.

In a preferred embodiment, the additive capable to reduce gums formation or buildup is selected among the unhindered phenols, the hindered phenols, aminophenols and mixtures thereof. In another most preferred embodiment, the additive capable to reduce gums formation or buildup is selected among phenylenediamines.

In a preferred embodiment, suitable additives include 4-tert butylcatechol (TBC); 2,6-di tertbutylphenol; butylated hydroxyltoluene (BHT), tocopherols including alpha-, beta-, gamma-, delta-tocopherol, phenylenediamines, in particular those of the above list, and mixtures thereof.

**As regards the additive which is a dispersant agent, such** additive is a dispersant/detergent capable to prevent the agglomeration of insoluble compounds, formed during oxidation reactions. Such additive does not reduce the gum content.

The dispersant/detergent agent used in the present invention may be selected from:
(i) substituted amines such as N-polyisobutene amine R1-NH₂, N-polyisobutene-ethylenediamine R1-NH-R2-NH₂,
(ii) alkenyl succinimides, for example obtained by reacting an alkenyl succinic anhydride or acid with an amine or a polyamine, or their bissuccinimide, succinnamic, succinamide structural equivalents, for example succinimides of formula (IV): 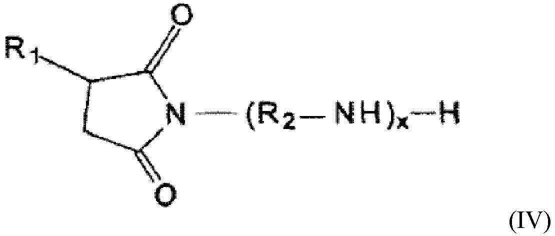 where R1 represents a C2-C120 or C2-C100 alkenyl group, for example a polyisobutylene group of weight-average molecular weight between 140 and 5000 and preferably between 500 and 2000 or preferably between 750 and 1250; and where R2 represents at least one of the following segments -CH₂-CH₂-, CH₂-CH₂-CH₂ , -CH-CH(CH₃)- and x represents an integer between 1 and 6.
(iii) the polyethylenamines. They are for example described in detail in the reference "Ethylene Amines," Encyclopedia of Chemical Technology, Kirk and Othmer, Vol. 5, pp. 898-905, Interscience Publishers, New York (1950).
(iv) the polyetheramines of formula (V): 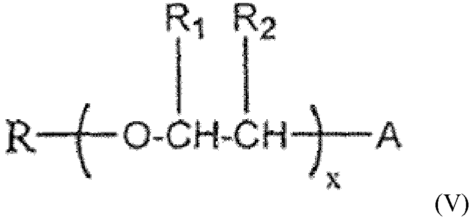 where R is an alkyl or aryl group having from 1 to 30 carbon atoms; R1 and R2 are each independently a hydrogen atom, an alkyl chain with 1 to 6 carbon atoms or -O-CHR1-CHR2-; A is an amine or N-alkylamine with 1 to 20 carbon atoms in the alkyl chain, an N,N-dialkylamine having from 1 to 20 carbon atoms in each alkyl group, or a polyamine with 2 to 12 nitrogen atoms and from 2 to 40 carbon atoms and x is in the range from 5 to 30.
   Such polyetheramines are marketed for example by the companies BASF, HUNSTMAN or CHEVRON.
(v) the products of reaction between a phenol substituted with a hydrocarbon chain, an aldehyde and an amine or polyamine or ammonia. The alkyl group of the alkylated phenol can comprise from 9 to 110 carbon atoms. This alkyl group can be obtained by polymerization of olefinic monomer containing from 1 to 10 carbon atoms (ethylene; propylene; 1-butene, isobutylene and 1-decene). The polyolefins that are used in particular are polyisobutene and/or polypropylene. The polyolefins generally have a weight-average molecular weight Mw between 140 and 5000 and preferably between 500 and 2000 or preferably between 750 and 1250.

The alkyl phenols can be prepared by an alkylation reaction between a phenol and an olefin or a polyolefin such as polyisobutylene or polypropylene. The aldehyde used can contain from 1 to 10 carbon atoms, generally formaldehyde or paraformaldehyde.

The amine used can be an amine or a polyamine including the alkanolamines having one or more hydroxyl groups. The amines used are generally selected from ethanolamine, diethanolamines, methylamine, dimethylamine, ethylenediamine, dimethylaminopropylamine, diethylenetriamine, triethylenetetramine, tetraethylenepentamine and/or 2-(2-aminoethylamino)ethanol. This dispersant can be prepared by a Mannich reaction by reacting an alkylphenol, an aldehyde and an amine as described in patent U.S. Pat. No.5,697,988.

Other dispersants, such as:
(vi) carboxylic dispersants such as those described in U.S. Pat. No.3,219,666;
(vii) the amine dispersants resulting from reaction between halogenated aliphatics of high molecular weight with amines or polyamines, preferably polyalkylene polyamines, described for example in U.S. Pat. No.3,565,804;
(viii) polymeric dispersants obtained by polymerization of alkyl acrylates or alkyl methacrylates (C8 to C30 alkyl chains), aminoalkyl acrylates or acrylamides and acrylates substituted with poly(oxyethylene) groups. Examples of polymeric dispersants are described for example in U.S. Pat. No.3,329,658 and U.S. Pat. No.3,702,300;
(ix) dispersants containing at least one aminotriazole group such as described for example in U.S. Patent Publication No. 2009/0282731 resulting from reaction of a dicarboyxlic acid or anhydride substituted with a hydrocarbyl and an amine compound or salt of the (amino)guanidine type;
(x) oligomers of polyisobutylsuccinic anhydride (PIBSA) and/or of dodecylsuccinic anhydride (DDSA) and of hydrazine monohydrate, such as those described in EP 1,887,074;
(xi) oligomers of ethoxylated naphthol and of PIBSA, such as those described in EP 1,884,556;
(xii) quaternized ester, amide or imide derivatives of PIBSA, such as those described in WO2010/132259;
(xiii) mixtures of Mannich bases such as substituted phenols/aldehydes/mono-or polyamines, for example dodecylphenol/ethylenediamine/formaldehyde, and of polyisobutylene succinimides (PIBSI), such as those described in WO2010/097624 and WO 2009/040582;
(xiv) quaternized terpolymers of ethylene, of alkenyl ester(s) and of monomer(s) with at least one ethylenic unsaturation and containing an at least partially quaternized tertiary nitrogen, such as those described in WO2011/134923;
(xv) polyisobutylene succinimides (PIBSAD) represented by the formula (VI) 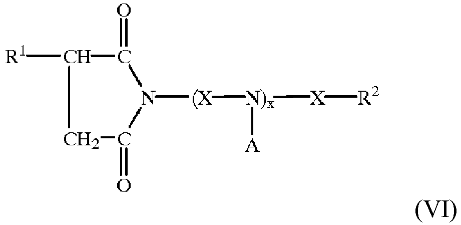 where R¹ is a hydrocarbyl radical having from about 8 to 800 carbon atoms, X is a divalent alkylene or secondary hydroxy substituted alkylene radical having from 2 to 3 carbon atoms, A is hydrogen or a hydroxyacyl radical selected from the group consisting of glycolyl, lactyl, 2-hydroxy-methyl propionyl and 2,2'bishydroxymethyl propionyl radicals and in which at least 30 percent of said radicals represented by A are said hydroxyacyl radicals, x is a number from 1 to 6, and R² is a radical selected from the group consisting of --NH2--NHA or a hydroxcarbyl substituted succinyl radical having the formula (VII) 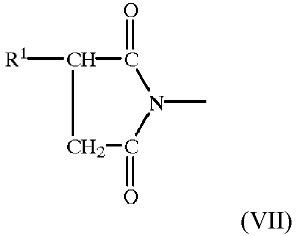 in which R¹ is as defined above;
(xvi) products of the reaction of alkenyl succinic anhydride, an amine and phosphorus pentasulfide such as those described in US 3 342 735, where the formula (VIII) of the alkenyl succinic anhydride is: 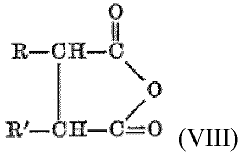 where R is a polyalkene derived radical of an average molecular weight between about 300 and 5000 and R' is a member selected from the group consisting of hydrogen and alkyl of from 1 to 6 carbon atoms, and
   an amine selected from the group consisting of 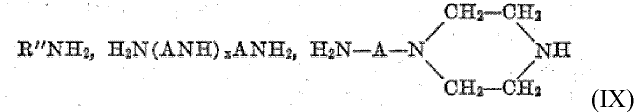 and 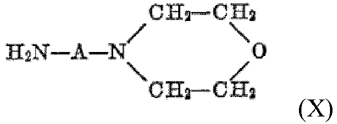 where R" is a C1-C20 alkyl group, A is a C1-C4 alkylene radical and x is a whole integer from 0 to 5 ;
(xvii) alkylbenzene sulfonates, such as alkali metal or ammonium salts of alkylbenzenesulfonates, in which the alkyl group contains 8-18 carbons, for example sodium dodecylbenzenesulfonate;
(xviii) Metal sulfonates, such as alkali metal sulfonates or alkaline earth metal sulfonates, for example calcium sulfonate, magnesium sulfonates.

In a preferred embodiment, the dispersant/detergent agent used in the present invention may be selected from the above compounds (ii), (xv), (xvii) and (xviii). Such preferred dispersant/detergent agent(s) may be added to the above-described additive(s) capable to reduce gums formation or buildup and more particularly to the preferred additive(s), especially to hindered phenols, more preferably to BHT.

**As regards the tall oil fatty acids reacted with a polyamine** that can be used as additive capable to reduce gums formation or buildup, they correspond to the products of a condensation reaction of tall oil fatty acids with a polyamine. Typically, the reaction products include tall oil fatty acid polyamides.

The tall oil fatty acids and polyamine are generally reacted in a molar ratio 1: 1 at temperatures between 250 and 290 °C and usually a mixture of tall oil fatty acid polyamide and the corresponding tall oil fatty acid imidazoline is obtained. The tall oil fatty acids are typically obtained by distillation of a crude tall oil.

In a preferred embodiment, the polyamine is a polyalkylene polyamine, in particular an ethylene polyamine, such as diethylenetriamine (DETA), triethylenetetramine (TETA), or tetraethylenepentamine (TEPA), preferably DETA.

A suitable additive includes the product registered with the CAS n°1226892-43-8.

**As regards other additives that may be used,** metal deactivators or passivators and metal chelating agents may be added alone or in combination with any of the preceding additives.

Metal passivators can comprise triazoles, alkylated benzotriazoles and alkylated tolutriazoles, derivatives from 2,5-dimercapto-1,3,4-thiadiazole, in particular bisulfides derivatives.

Metal chelating agents can comprise dialkyl phosphonates, in which the alkyl group contains 1-18 carbons.

**As regards the stabilized composition,** it is of use in industrial processes for plastic recycling in which hydrocarbon streams is handled or manipulated to produce synthetic gas.

The additive(s) capable to reduce gums formation or buildup, and optionally the dispersing agent(s) may be used in any effective proportion that slows the oxidation sufficiently that it can be used in the disclosed process without significant detrimental effects.

For example, the proportion of 2) with reference to 1) can be up to 5000wppm, advantageously up to 3000 wppm, in particular from 50 to 5000 wppm, preferably from 50 to 3000 wppm, most preferably from 100 to 1500wppm, or within any of these limits.

For example, the proportion of 3) with reference to 1) can be up to 5000wppm, advantageously up to 3000 wppm, in particular from 50 to 5000 wppm, preferably from 50 to 3000 wppm, most preferably from 100 to 1500wppm, or within any of these limits.

For example, the proportion of 4) with reference to 1) can be up to 5000wppm, advantageously up to 3000 wppm, in particular from 50 to 5000 wppm, preferably from 50 to 3000 wppm, most preferably from 100 to 1500 wtppm or from 300 to 1500wppm, or within any of these limits.

The additives of this invention may also be used with other additives known to prevent fouling such as metal deactivators, corrosion inhibitors and the like. For example, the proportion of the other additives with reference to 1) can be up to 5000wppm, advantageously up to 3000 wppm, in particular from 50 to 5000 wppm, preferably from 50 to 3000 wppm, most preferably from 100 to 1500wppm, or within any of these limits.

### As regards the process for preparing a composition stabilized against premature polymerization

Step (a1) for providing a hydrocarbon stream as defined above may comprise:
(i) providing at least one plastic liquefaction oil by liquefaction of plastic waste,
(ii) optionally providing a diluent,
(iii) preparing a hydrocarbon stream having a diene value of at least 0.5 g I2/100 g, preferably at least 1 g I2/100 g, as measured according to UOP 326, a bromine number of at least 5 g Br2/ 100g as measured according to ASTM D1159 by mixing said at least one plastic liquefaction oil provided in step (i) with the diluent provided in step (ii) when present, said composition comprising at least 1wt% of plastic liquefaction oil, the remaining part of said hydrocarbon stream being a diluent.

Step (i) may include a step of liquefying waste containing plastics and obtaining a hydrocarbon product comprising a gaseous phase, a liquid phase and a solid phase followed by a step of separating the liquid phase of said product, said liquid phase forming a plastic liquefaction oil. The separation step removes the gaseous phase, essentially the C1-C4 hydrocarbons and the solid phase (typically char) to recover only the liquid organic phase forming a liquefaction oil.

Liquefaction step may comprise a pyrolysis step, typically carried out at a temperature of 300 to 1000°C or 400 to 700°C, such pyrolysis being for example fast pyrolysis or flash pyrolysis or catalytic pyrolysis or hydropyrolysis. Alternatively, or in combination, liquefaction step may comprise a hydrothermal liquefaction step, typically performed at a temperature of 250-500°C and at pressures of 10-25-40 MPa.

The waste material processed in liquefaction step may be waste plastic optionally mixed with biomass and/or elastomer, as previously described.

In one embodiment, in step (a2), said at least one additive capable to reduce gums formation or buildup, which is an antioxidant or an antipolymerant or a precursor thereof, is added to said at least one plastic liquefaction oil provided by step (i), prior to step (iii). In an embodiment, the additives are added to the plastic liquefaction oil immediately after the liquefaction of the plastic waste.

In one embodiment, in step (a3), said at least one additive which is a dispersant agent is added to said at least one plastic liquefaction oil provided by step (i), prior to step (iii), preferably immediately after the liquefaction of the plastic waste.

In one embodiment, in step (a4), said at least one additive which is a metal passivator and/or a metal chelating agent is added to said at least one plastic liquefaction oil provided by step (i), prior to step (iii), preferably immediately after the liquefaction of the plastic waste.

In one embodiment, steps (a2) and (a3) are performed simultaneously, preferably immediately after the liquefaction of the plastic waste.

Any additional additive, such as metal passivator and/or a metal chelating agent, may be added to the composition in any of steps (a1), (a2) or (a3).

Whatever the embodiment, the additives can be introduced as pure or as a dilute solution in a hydrocarbon or equivalent and/or they can be introduced simultaneously or separately. For example, the additives may be diluted in hydrocarbons, for example C6-C20 aromatic hydrocarbons substituted or not, including toluene, benzene, naphthalene, substituted or not, and their mixtures, heavy aromatic naphtha, a middle distillate (boiling range 180-360°C) such as a jet fuel or a diesel, or in polar solvents, in particular alcohols such as glycols, ethanol, or water.

The stabilized composition described in the present invention or obtained by step
a) of the process of the present invention is further processed in the gasification unit alone or in combination with another feedstock.

**As regard of the optional purification step (b),** to trap silicon and/or metals and/or phosphorous and/or halogenates over at least one trap to obtain a purified composition.

With regards to traps for the silicon and/or metals and/or phosphorous and/or halogenates, it consists in silica gel, clays, alkaline or alkaline earth metal oxide, iron oxide, ion exchange resins, active carbon, active aluminium oxide, molecular sieves, and/or porous supports containing lamellar double hydroxide modified or not and silica gel, or any mixture thereof used in the fixed bed techniques known in the art. The trap is able to capture silicon and/or metals and/or phosphorous and/or halogenates, being preferably chosen among Ca, Mg, Hg via absorption and/or adsorption or it can also be constituted of one or more active guard bed with an adapted porosity. It can work with or without hydrogen coverage. The trap can be constituted of an adsorbent mass such as for instance a hydrated alumina. Molecular sieves can also be used to trap silicon. Other adsorbent can also be used such as silica gel for instance. The silicon trap is preferably able to trap organic silicon. Indeed, it is possible that the silicon present in the streams is in the form of organic silicon.

In a preferred embodiment, silicon and/or metals and/or phosphorous and/or halogenates are trapped with activated carbon. Activated carbon possesses preferably a high surface area (600-1600 m2/g) and is preferably porous and hydrophobic in nature. Those properties lead to a superior adsorption of non-polar molecules or little ionized molecules. Therefore, activated carbon can be used to reduce for instance siloxane from the liquid feed at temperature from 20 to 150°C, at pressures from 1 to 100 bar or from vaporized feed from 150 to 400°C at pressure from 1 to 100 bar.

In a preferred embodiment, silicon and/or metals and/or phosphorous and/or halogenates are trapped with silica or silica gel. Silica gel is an amorphous porous material, the molecular formula usually as (SiO₂)·nH₂O, and unlike activated carbon, silica gel possesses polarity, which is more conductive to the adsorption of polar molecules. Because of -Si-O- Si- bonds, siloxanes exhibit partial polar character, which can contribute to adsorb on silica gel surface.

In a preferred embodiment, silicon and/or metals and/or phosphorous and/or halogenates are trapped with molecular sieves. Molecular sieves are hydrous aluminosilicate substance, with the chemical formula Na2O·Al2O3·nSiO2·xH2O, which possesses a structure of three-dimensional crystalline regular porous and ionic exchange ability. Compared with silica gel, molecular sieves favour adsorption of high polarity. The regeneration of exhausted absorbents can be achieved via heating at high temperature to remove siloxane. Often, the regeneration is less efficient as the siloxanes might react irreversibly with the molecular sieve. In a most preferred embodiment, the molecular sieves are ionexchanged or impregnated with a basic element such as Na. Na2O impregnation levels range from 3-10% wt typically and the type of sieve are typically of the A or faujasite crystal structure.

In a preferred embodiment, silicon and/or metals and/or phosphorous and/or halogenates are trapped with activated aluminium oxide. Activated aluminium oxide possesses large surface area (100-600 m2/g), which shows high affinity for siloxanes but also for polar oxide, organic acids, alkaline salts, and water. It can be an alkaline or alkaline-earth or rare-earth containing promoted alumina, the total weight content of these doping elements being less than 20%wt, the doping elements being preferably selected from Na, K, Ca, Mg, La, or mixture thereof. It can also be a metal promoted alumina where the metal is selected from group VI-B metal with hydrogenating activity such as Mo, W and/or from group VIII metal, such as Ni, Fe, Co.

In another embodiment, silicon and/or metals and/or phosphorous and/or halogenates are trapped with alkaline oxide. Alkaline oxide for high temperature treatment such as calcium oxide (CaO) has strong activity to breakdown siloxanes and can be used as non-regeneratable adsorbent at temperature between 150 and 400°C.

In another embodiment, silicon and/or metals and/or phosphorous and/or halogenates are trapped with porous supports containing lamellar double hydroxides, being preferably an hydrotalcite. The hydrotalcite can comprise one or more metals with hydrogenating capacity selected from group VIB or Group VIII, preferably Mo. Those metals can be supported on the surface of the hydrotalcite, or can have been added to the actual structure of the lamellar double hydroxide, in complete or partial substitution; as an example, but without limiting the scope of the present invention, the divalent metal, usually Mg, can be exchanged for Ni, or the trivalent metal, substituted by Fe instead of Al.

The above-mentioned solid adsorbents can be used alone or in any combination in order to optimize the removal of silicon and/or metals and/or phosphorous and/or halogenates.

In another embodiment, silicon and/or metals and/or phosphorous and/or halogenates are trapped with a multi layered guard bed comprising at least two layers wherein the layer on the top of the bed is selected from silica gel, clays, alkaline or alkaline earth metal oxide, iron oxide, ion exchange resins, active carbon, active aluminium oxide, molecular sieves and wherein the layer on the bottom of the bed is selected from silica gel, clays, alkaline or alkaline earth metal oxide, iron oxide, ion exchange resins, active carbon, active aluminium oxide, molecular sieves. More preferably said layer on the top of the guard bed comprises silica gel and/or active carbon and said layer on the bottom of the guard bed comprises molecular sieves and/or active aluminium oxide.

In another embodiment, when the plastic liquefaction oil contains high quantities of HCl and/or Halogenated compounds (namely at least 500 ppm wt of HCl based on the total amount of plastic liquefaction oil), particular adsorbents can be used such as silica, clays - such as bentonite, hydrotalcite - alkaline or alkaline earth metal oxide - such as iron oxides, copper oxides, zinc oxide, sodium oxide, calcium oxide, magnesium oxide-alumina and alkaline or alkaline-earth promoted alumina-, iron oxide (hematite, magnetite, goethite), ion exchange resins or combination thereof. In a most preferred embodiment, silicon and/or metals and/or phosphorous and/or halogenates containing at least 500 ppm wt of HCl based on the total amount of plastic liquefaction oil are trapped with activated alumina. As HCl is a polar molecule, it interacts with polar sites on the alumina surface such as hydroxyl groups. The removal mechanism relies predominantly on physical adsorption and low temperature and the high alumina surface area is required to maximize the capacity for HCl removal. The HCl molecules remain physically adsorbed as a surface layer on the alumina and can be removed reversibly by hot purging. Promoted aluminas are a hybrid in which a high alumina surface area has been impregnated with a basic metal oxide or similar salts, often of sodium or calcium. The alumina surface removes HCl through the mechanisms previously described, however the promoter chemically reacts with the HCI giving an additional chloride removal mechanism referred to as chemical absorption. Using sodium oxide as an example of the promoter, the HCl is captured by formation of sodium chloride. This chemical reaction is irreversible unlike physical adsorption and its rate is favoured by higher temperature. The promoted alumina chloride guards are very effective for liquid feeds due to the irreversible nature and high rate of the chemical reaction once the HCl reaches the reactive site.

Another class of chemical absorbents combines Na, Zn and Al oxides in which the first two react with HCl to form complex chloride phases, for example Na₂ZnCl₄ and the chemical reactions are irreversible. U.S. 4,639,259 and 4,762,537 relate to the use of alumina-based sorbents for removing HCl from gas streams. U.S. 5,505,926 and 5,316,998 disclose a promoted alumina sorbent for removing HCl from liquid streams by incorporating an alkali metal oxide such as sodium in excess of 5% by weight on to an activated alumina base. Other Zn-based products range from the mixed metal oxide type composed of ZnO and Na2O and/or CaO. The rate of reaction is improved with an increase in reactor temperature for those basic (mixed) oxides.

**As regards the optional separation step by distillation,** the stabilized composition provided in step a), or optionally the purified composition provided in step b), is separated by distillation in at least two distinct fractions, typically a heavy fraction and a light fraction.

It is then possible to send one of these fractions to the gasification step c), advantageously, a heavy fraction or the heaviest fraction is sent to the gasification step c).

This separation can be done by distillation, especially by atmospheric distillation or by distillation under reduced pressure.

This separation may allow the stabilized composition to be separated into two or more fractions, the lighter fraction(s) being sent to steam cracking or other refining units, for example, and the heavy fraction(s) being sent to step c).

The stabilized composition provided in step a), or optionally the purified composition provided in step b), can be fractionated into usable streams, the cut-off points of which are typically chosen according to the subsequent treatment. This fractionation can be carried out according to distillation temperature ranges, for example to separate LPG, gasoline, diesel, heavy fuel oil and kerosene type streams, which can then be treated in a gasifier and/or steam cracker and/or in a catalytic cracker and/or in a hydrocracker (and then possibly in a steam cracker) and/or in a hydrotreatment reactor and/or used as such for the preparation of fuels, combustibles, lubricants or base oils. The person skilled in the art knows how to select the most suitable fractions for the subsequent processing units according to the desired objective.

In particular, fractions 350+ °C or 375+ °C will advantageously be sent to the gasification step c). The fractions 350+ °C, respectively 375+ °C correspond to fractions with an initial boiling point higher than or equal to 350 °C, respectively 375 °C.

**As regards of the gasification by partial oxidation step (c),** the stabilized composition provided in step a), or optionally the purified composition provided in step b), or a fraction thereof, preferably a heavy fraction thereof, is treated alone or mixed with another hydrocarbon feed, in a partial oxidation gasification unit to produce synthesis gas comprising at least dihydrogen, carbon monoxide, and carbon dioxide.

Depending on the initial heteroatom contents of the plastic liquefaction oil, the stabilized composition provided in step a), or optionally the purified composition provided in step b), or a fraction thereof, may be subjected to the gasification step in admixture with other conventional feedstocks of petroleum origin, in particular depending on the available volumes and/or so that the heteroatom content of the feedstock entering the gasification step has a heteroatom content that complies with the requirements. In particular, the feedstock of the gasification stage may contain up to 100 wt.%, 90 wt.%, 80 wt.%, 70 wt.%, 60 wt.%, 50 wt.%, 40 wt.%, 30 wt.%, 20 wt.%, 15 wt.%, 10 mass % or 5 mass % of the stabilized composition provided in step a), or optionally the purified composition provided in step b), or a fraction thereof, or a content within any range defined by two of these limits.

The stabilized composition provided in step (a), or the purified composition provided in step (b), or a fraction thereof, in particular a heavy fraction thereof, may, prior to step (c), be mixed with another hydrocarbon feedstock, such naphtha, gasoil or any crude oil refining product, but preferably a conventional heavy feed used in a POX corresponding to a 350+ °C or 375+ °C cut, to have a stabilized composition concentration or a purified composition concentration or a heavy concentration ranging from 0.01 wt% to at most 90 wt%; preferably 0.1 wt% to 75 wt% even more preferably 1 wt% to 50 wt% or within any of these limits.

The other hydrocarbon feedstock may come from the processing of a crude oil. This hydrocarbon feedstock generally corresponds to a 350+ °C or 375+ °C cut. It is typically a visbroken residue, a VGO (vacuum gas oil), a residue from an atmospheric distillation, a residue from a vacuum distillation, a visbroken residue from a vacuum distillation, alone or in mixture.

This gasification step may be a partial oxidation gasification step implemented in a partial oxidation gasification unit to produce a syngas comprising at least dihydrogen, carbon monoxide and carbon dioxide.

As used herein, "partial oxidation (POX) gasification unit or facility" or "POX facility" refers to a facility that includes all equipment, lines, and controls necessary to carry out POX gasification of liquefied waste plastic. For example, the gasification facility may comprise a gasifier, a gasifier feed injector, a gasifier ball mill, a feed spray unit, and/or a solidification tank.

As used herein, the term "partial oxidation" refers to high temperature conversion of a carbon-containing feed into syngas (carbon monoxide, hydrogen, and carbon dioxide), where the conversion is carried out with an amount of oxygen that is less than the stoichiometric amount of oxygen needed for complete oxidation of the carbon to CO₂. The reactions occurring within a partial oxidation (POX) gasifier include conversion of a carbon-containing feed into syngas, and specific examples include, but are not limited to partial oxidation, water gas shift, water gas - primary reactions, Boudouard reaction, methanation, hydrogen reforming, steam reforming, and carbon dioxide reforming.

The present technology is generally directed to a method of producing synthesis gas (syngas) from a plastic liquefied material. The method generally comprises feeding the plastic liquefaction oil and an oxidizing agent comprising molecular oxygen (0₂) into a POX gasifier and performing a partial oxidation reaction within the gasifier by reacting at least a portion of the plastic liquefaction oil and at least a portion of the molecular oxygen. The plastic material feedstock may be in a solid or liquid form prior to being fed to the POX gasifier.

The POX gasification facility includes at least one POX gasification reactor or gasifier. In one embodiment or in combination with any of the mentioned embodiments, the POX gasification unit may comprise a liquid-fed gasifier, or a solid-fed gasifier. More particularly, in various embodiments, the POX gasification unit may conduct liquid-fed POX gasification. As used herein, "liquid-fed POX gasification" refers to a POX gasification process where the feed to the process comprises predominately (by weight) components that are liquid at 25°C and 1 atm. Additionally, or alternatively, in various embodiments, POX gasification unit may conduct solid-fed POX gasification. As used herein, "solid-fed POX gasification" refers to a POX gasification process where the feed to the process comprises predominately (by weight) components that are solid at 25°C and 1 atm. Liquid-fed, and solid-fed POX gasification processes can be co-fed with lesser amounts of other component having a different phase at 25°C and 1 atm. Thus, liquid-fed POX gasifiers can be co-fed with gasses and/or solids, but only in amounts (by weight) less than the amount of liquids fed to the liquid-fed POX gasifier; and solid-fed POX gasifiers can be co-fed with gasses and/or liquids, but only in amounts (by weight) less than the amount of solids fed to the solid-fed POX gasifier. In one embodiment or in combination with any of the mentioned embodiments, the total feed to a liquid-fed POX gasifier can comprise at least 60, or at least 70, or at least 80, or at least 90, or at least 95 weight percent of components that are liquid at 25°C and 1 atm; and the total feed to a solid-fed POX gasifier can comprise at least 60, or at least 70, or at least 80, or at least 90, or at least 95 weight percent of components that are solids at 25°C and 1 atm.

In an embodiment or in combination with any embodiment mentioned herein, the oxidizing agent comprises an oxidizing gas that can include air, oxygen-enriched air, or molecular oxygen (O₂), or steam.

The partial oxidation gasification may be performed in presence of a catalyst or not. Suitable catalyst include one or more metal components of groups 8-10 of the periodic classification, such as platinum, palladium, rhodium, iridium, osmium, ruthenium, and optionally, one or more elements of group 5-7, 11, of the periodic classification, such as iron, cobalt, nickel, copper, vanadium and chromium, those elements being typically supported on a support such as zirconia, alumina, CeO₂, Y₂O₃, or TiO₂.

In an embodiment or in combination with any embodiment mentioned herein, the gasification zone, and optionally all reaction zones in the gasifier/gasification reactor, may be operated at a temperature of at least 1000°C, at least 1100°C, at least 1200°C, at least 1250°C, or at least 1300°C and/or not more than 2500°C, not more than 2000°C, not more than 1800°C, or not more than 1600°C, or within any ranges defined by any of these temperatures. The reaction temperature may be autogenous. Advantageously, the gasifier operating in steady state mode may be at an autogenous temperature and does not require application of external energy sources to heat the gasification zone.

In an embodiment or in combination with any embodiment mentioned herein, the gasifier may be operated at a pressure within the gasification zone (or combustion chamber) of at least 1.3 MPa to 9MPa, Examples of suitable pressure ranges include 2 to 7 MPa, 2 to 6 MPa, 2.5 to 7 MPa, 2 to 5.5 MPa, 3 to 5 MPa or any ranges defined by any of the limits of these ranges.

Generally, the average residence time of gases in the gasifier reactor can be very short to increase throughput. Since the gasifier may be operated at high temperature and pressure, substantially complete conversion of the feedstock to gases can occur in a very short time frame. In an embodiment or in combination with any embodiment mentioned herein, the average residence time of the gases in the gasifier can be not more than 30, not more than 25, not more than 20, not more than 15, not more than 10, or not more than 7 seconds, or within any ranges defined by any of these values.

Generally, the raw syngas stream discharged from the gasification vessel includes such gases as hydrogen, carbon monoxide, and carbon dioxide and can include other gases such as methane, hydrogen sulfide, and nitrogen depending on the fuel source and reaction conditions.

### Detailed description of the figures

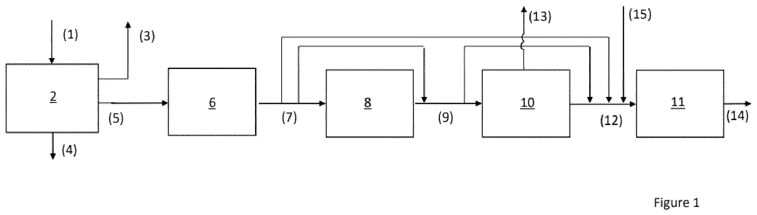

**Figure 1** describes a possible process scheme according to the invention. Raw plastic (1) waste, mixed or not with biomass and/or elastomers, is introduced into a liquefaction unit (2) under conditions suitable to produce a plastic liquefied oil (5), gas (3) and char (4). The plastic liquefied oil (5) then enters a stabilization section (6) including a mixing unit where the additives are mixed to the plastic liquefied oil (5) to obtain a stabilized composition (7). The stabilized composition (7) then enters an optional purification section (8) or goes directly to a partial oxidation gasification section (11). The purified plastic liquefied oil (9) then goes directly to partial oxidation gasification section (11) or enters an optional separation section (10) to be separated at least in a heavy fraction (12) and a light fraction (13), where the heavy fraction (12) is sent to the partial oxidation gasification section (11) to produce synthetic gas (14). Prior entering the gasification section (11), another hydrocarbon feedstock (15) may be added to the stream (7), (9) or (12), as previously detailed.

**Figure 2** is a graph representing the pressure variation across a reactor during the processing of a plastic liquefied oil without stabilization and with stabilization.

**Figures 3 to 5** are photos of the test tubes of example 4 for tests 1-3 respectively.

### Examples

### Example 1

An additive capable to reduce gums formation or buildup, here a phenolic compound, BHT (butylated hydroxyltoluene), has been added to several pyrolysis plastic oils. Existing gums have been determined by means of NF EN ISO 6246 (2018), potential gums by ASTM D873-12(2018).

The characteristics of the pyrolysis plastic oils alone and with the additive are presented in table 1.

**Table 1**

| | **Unit** | **HPP1** | **HPP2** | **HPP3** |
|---|---|---|---|---|
| bromine number | gBr/g | 45 | 25 | <1 |
| diene value | gI₂/g | 1.2 | 2.4 | 0.8 |
| MAV | mg anhydride | 4.6 | 9.3 | 3.1 |
| Oxygen content | Wt% | 0.12 | 0.06 | 0.1 |
| **Existing gums HPP** | **mg/100mL** | **102** | **13** | **2** |
| Reproducibility of the method | | 31 | 7 | 3 |
| Existing gums HPP + 1000ppm BHT | mg/100mL | 62 | 12 | 3 |
| **Potential gums HPP** | **mg/100mL** | **236** | **89** | **22** |
| Reproducibility of the method | | 69 | 28 | 9 |
| Potential gums HPP+ 1000ppm BHT | mg/100mL | 85 | 31 | 0.5 |

These results show a reduction of the formation of gums with the addition of BHT, particularly for potential gums.

### Example 2

Tests were performed using a pyrolysis oil cut having a boiling point ranging from 36 to 590°C, a nitrogen content of about 1500 wt ppm, a Si content of about 150 wt ppm, a chlorine content of about 500 wt ppm and a sulfur content of about 20 wt ppm. The pyrolysis oil was also characterized by a MAV at the inlet of about 7 gI2/100g and a Bromine Number of about 60 gBr2/100g. A sulfided NiMo on alumina catalyst was used in dilution with silicon carbide at equal volumes.

The tests were performed in the operating conditions presented in table 2.

**Table 2 - test conditions**

| | |
|---|---|
| Pression (barg) | 45 |
| LHSV (h⁻¹) | 2 |
| liquide flow rate (ml/h) | 200 |
| H2/HC (Nl/l) | 10 |
| H2 flow rate (Nl/h) | 1.4 |
| Inlet Temperature (°C) | Start Of Run: 50 |

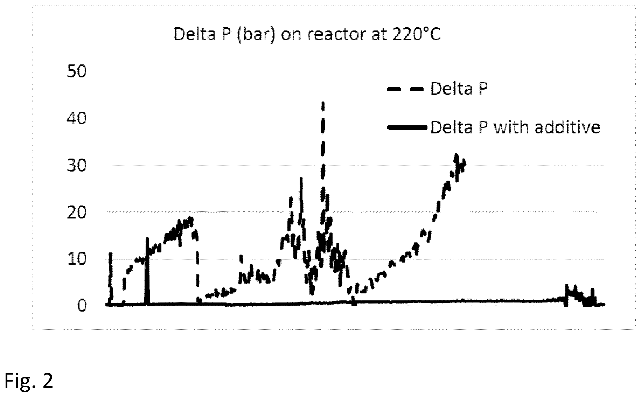

300 wt ppm of BHT has been added to the pyrolysis oil cut before the test. Since the beginning of the pyrolysis oil feeding, a delta P in the reactor appears, as shown in figure 2.

Then, the same pyrolysis oil with the 300 wt ppm of BHT and about 2000 ppm of a detergent containing sulfonate was processed and no delta P appears during minimum 4 days (see figure 2).

### Example 3

A pyrolysis oil cut HPP4 having the properties collected in table 3 has been heated with different additives.

The test proceeding is the following. 30ml of pyrolysis oil cut HPP4 has been introduced in a test tube in glass and heated at 200°C during 2 hours in presence of a piece of steel. This test has been made with the HPP4 alone (Test 1), the HPP4 with 1000 wt ppm of BHT (Test 2), and the HPP4 with 1000 wt ppm of a mixture 50/50 of BHT and a dispersant (Test 3). The dispersant used in test 3 is the commercial dispersant Total PIBSI^{®} and contains reaction products between polyisobutylene succinic anhydride and tetraethylene pentaamine (CAS n°84605-20-9). At the end of the tests, the gum quantity in the HPP4 has been measured by the existing gum method NF EN ISO 6246 (2018) with a lower sample quantity of pyrolysis oil cuts, and the quantity of gums deposited on the test tube and on the piece of steel have ween weighted, the gum contents are collected in table 4.

**Table 3 - Properties of the pyrolysis oil HPP4**

| | Unit | HPP4 |
|---|---|---|
| MAV | mg anhydride | 22,8 |
| IBr | gBr/g | 52 |
| diene value | gI2/g | 5,9 |
| Oxygen content | Wt% | 0,92 |
| Existing gums | mg/100mL | 59 |
| Potential gums | mg/100mL | 1073 |

**Table 4 - Gum contents**

| | Test 1 | Test 2 | Test 3 |
|---|---|---|---|
| Gums in HPP4 | 153 mg/100 mL | 272 mg/100 mL | 225 mg/100 mL |
| Gums deposited on the test tube | Not measured | 66 mg/100 mL | 37 mg/100 mL |
| Gums on the steel piece | Not measured | 0 | 0 |
| Total | | 338 mg/100 mL | 262 mg/100 mL |

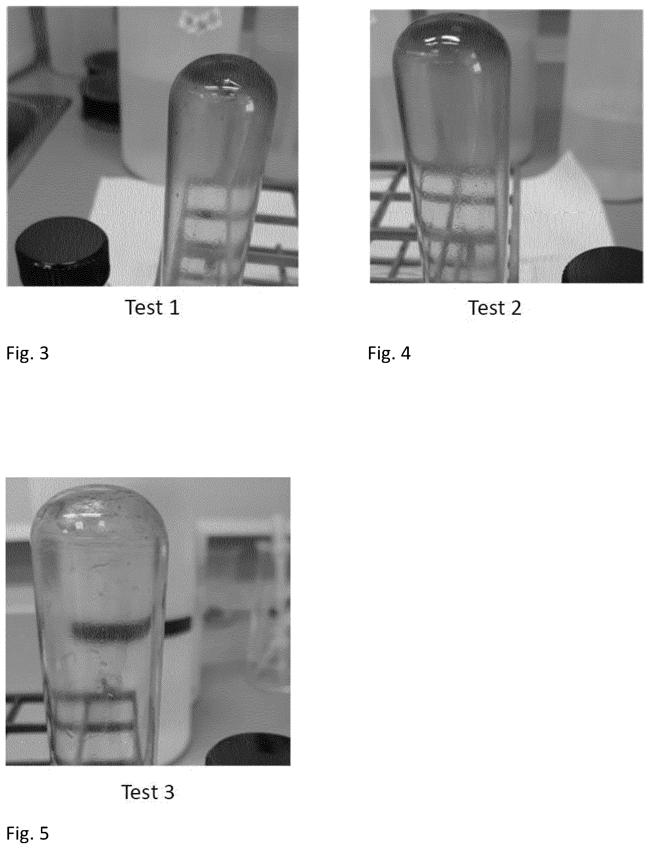

The photos of the tubes at the end of the tests are shown in figures 3-5. We can observe a difference in the colors of the deposits between the photos of the tube with the dispersant/BHT mixture (test 3-fig. 5) and without additive (test 1-fig.3).

On the other hand, the gum values are lower in the oil and on the test tube with the BHT/dispersant mixture (test 3) than with BHT alone (test 2). This additive mixture seems to be more effective than BHT alone when considering the deposits on the test tube only. In tests 2 and 3, no deposits were observed on the piece of steel.

These tests show a synergy of the dispersant + BHT additives for the minimization of deposits on the test tube compared to BHT alone. As the deposit of gums is less important for the BHT/dispersant mixture than with BHT, high temperatures treatments for a longer period can be envisaged.

### Example 4

The pyrolysis oil cut HPP4 of example 3 has been tested with a tall oil derivative as additive which is the reaction product of tall oil fatty acid and diethylenetriamine. The CAS number of the tall oil derivative is 1226892-43-8.

Oxidation stability tests, such as induction period measurements, have been performed with and without the tall oil derivative, in presence of steel. The results are collected in table 5. It can be seen a net improvement of the oxidation stability in the presence of the additive.

**Table 5**

| | | | | |
|---|---|---|---|---|
| | 0 ppm additive t = 0 | 1000 ppm additive t = 0 | 0 ppm additive t = 2 weeks | 1000 ppm additive t = 2 weeks |
| | Induction period Petrooxy EN 16091 :2022 | Induction period Petrooxy EN 16091 :2022 | Induction period Petrooxy EN 16091 :2022 | Induction period Petrooxy EN 16091:2022 |
| HPP4 | 18,8 mn | 52,1 mn | 19,9 mn | 35,8 mn |

## Claims

1. Process for the production of synthesis gas by partial oxidation from a hydrocarbon stream containing plastic liquefaction oil, comprising:
a) providing a composition stabilized against premature polymerization comprising:
1) a hydrocarbon stream having a diene value of at least 0.5 g I₂/100 g as measured according to UOP 326, a bromine number of at least 5 g Br₂/ 100g as measured according to ASTM D 1159, and containing at least 1 wt% of plastic liquefaction oil which is containing contaminants, wherein said contaminants comprise constituents which are not boiling below 700°C, preferably not below 600°C, such as gums in the form of plastic oligomers and residues of liquefaction of plastic, optionally metals and optionally solids, the remaining part of said hydrocarbon stream being a diluent,
2) at least one additive capable to reduce gums formation or buildup which is an antioxidant or an antipolymerant or a precursor thereof,
3) optionally at least one additive which is a dispersant agent,
4) optionally at least one other additive which is a metal passivator and/or a metal chelating agent,
b) an optional purification step to trap silicon and/or metals and/or phosphorous and/or halogenates over at least one trap to obtain a purified composition,
c) gasifying by partial oxidation the stabilized composition provided in step (a), or the purified composition provided in step (b), in a partial oxidation gasification unit to produce synthesis gas comprising at least dihydrogen, carbon monoxide, and carbon dioxide.

2. Process according to claim 1 comprising at least one of the following characteristics:
- at least one additive capable to reduce gums formation or buildup and at least one dispersant agent are present in the composition provided in step (a),
- said at least one additive capable to reduce gums formation or buildup is an antipolymerant such as a stable free radical or a precursor thereof,
- the antipolymerant is selected from a stable nitroxide free radical and a hydroxylamine substituted with at least one alkyl, aryl or alkylaryl group,
- said at least one additive capable to reduce gums formation or buildup is selected among the unhindered phenols, the hindered phenols, the aminophenols, the phenylenediamines and mixtures thereof,
- said at least one additive which is a dispersant agent is selected from products of reaction between a phenol substituted with a C9-110 hydrocarbon chain, an aldehyde and an amine or polyamine or ammonia, from alkenyl succinimides and mixtures thereof.

3. Process according to claim 1 or 2 wherein said at least one additive capable to reduce gums formation or buildup is selected from hindered phenols including metal salts thereof, and said at least one dispersant agent is selected from alkylbenzene sulfonates in which the alkyl group contains 8-18 carbons, metal sulfonates and alkenyl succinimides.

4. The process according to claim 3 wherein said at least one additive capable to reduce gums formation or buildup is a hindered phenol and said at least one dispersant agent is a polyisobutylene succinimide.

5. Process according to claim 4 wherein said at least one additive capable to reduce gums formation or buildup is selected from 4-tert butylcatechol (TBC); 2,6-di tertbutylphenol; butylated hydroxyltoluene (BHT) and said at least one dispersant agent is a polyisobutylene succinimide, in particular of CAS n°84605-20-9.

6. Process according to any one of the preceding claims wherein said at least one additive capable to reduce gums formation or buildup is the product of tall oil fatty acids reacted with a polyalkylene polyamine, optionally selected from diethylenetriamine, triethylenetetramine, or tetraethylenepentamine.

7. Process according to any one of the preceding claims, comprising at least one of the following characteristics:
- the proportion of 2) with reference to 1) is from is from 20 to 5000wppm, preferably from 50 to 3000wppm, more preferably from 100 to 1500wppm,
- the proportion of 3) with reference to 1) is from 20 to 5000wppm, preferably from 50 to 3000wppm, more preferably from 100 to 1500wppm,
- the proportion of 4) with reference to 1) is from 20 to 5000wppm, preferably from 50 to 3000wppm, more preferably from 100 to 1500wppm.

8. Process according to any one of the preceding claims, wherein step (a) comprising:
(a1) providing a hydrocarbon stream having a diene value of at least 0.5 g I2/100 g as measured according to UOP 326, a bromine number of at least 5 g Br2/ 100g as measured according to ASTM D1159, and containing at least 1 wt% of plastic liquefaction oil which is containing contaminants, wherein said contaminants comprise constituents which are not boiling below 700°C, preferably not below 600°C, such as gums in the form of plastic oligomers and residues of pyrolysis of plastic, optionally metals and optionally solids, the remaining part of said hydrocarbon stream being a diluent,
(a2) adding to the hydrocarbon stream provided in step (a) at least one additive capable to reduce gums formation or buildup which is an antioxidant or an antipolymerant or a precursor thereof,
(a3) optionally adding to the hydrocarbon stream provided in step (a) at least one additive which is a dispersant agent,
(a4) optionally adding to the hydrocarbon stream provided in step (a) at least one one other additive which is a metal passivator and/or a metal chelating agent.

9. Process according to claim 8, wherein step (a1) comprises:
(i) providing at least one plastic liquefaction oil by liquefaction of plastic waste,
(ii) optionally providing a diluent,
(iii) preparing a hydrocarbon stream having a diene value of at least 0.5 g I2/100 g as measured according to UOP 326, a bromine number of at least 5 g Br2/ 100g as measured according to ASTM D1159 by mixing said at least one plastic liquefaction oil provided in step (i) with the diluent provided in step (ii) when present, said composition comprising at least 1wt% of plastic liquefaction oil, the remaining part of said hydrocarbon stream being a diluent.

10. Process according to claim 9, wherein in step (a2), said at least one additive capable to reduce gums formation or buildup which is an antioxidant or an antipolymerant or a precursor thereof is added to said at least one plastic liquefaction oil provided by step (i), prior to step (iii).

11. Process according to claim 9 or 10, wherein in step (a3), said at least one additive provided in step (a2) and/or (a3) is added to said at least one plastic liquefaction oil provided by step (i), prior to step (iii).

12. The process according to any one of the preceding claims, wherein the stabilized composition provided in step a) or the purified composition provided in step b) is, prior to step c), separated by distillation into at least a heavy fraction and a light fraction, and the heavy fraction is sent to step c).

13. The process according to any one of the preceding claims, wherein the stabilized composition provided in step a) or the purified composition provided in step b), or the heavy fraction thereof is, prior to step c), mixed with another hydrocarbon feedstock to have a stabilized composition concentration or a purified composition concentration or a heavy fraction concentration ranging from 0.01 wt% to at most 90 wt%; preferably 0.1 wt% to 75 wt% even more preferably 1 wt% to 50 wt%.

14. Installation comprising a stabilizing section (6), an optional purification section (8), an optional separation section (10), a partial oxidation gasification (11), wherein said sections (6), (8), (10), (11), are fluidically connected to perform the process according to any of the preceding claims.
